# FASCICULE DE BREVET EUROPEEN

(11) **EP 3 403 808 B1**
(45) Date de publication et mention de la délivrance du brevet: **23.09.2020**
(21) Numéro de dépôt: 18305617.5
(22) Date de dépôt: 18.05.2018
(51) Int. Cl.: B29C 65/02, B29C 65/74, B29C 65/78, B65B 7/16, B65B 51/14, B65B 59/00, B65B 31/02

(54) **MACHINE D'OPERCULAGE DE BARQUETTES MULTIFORMAT**
MASCHINE ZUM VERSIEGELN VON MULTIFORMAT-SCHALEN
MACHINE FOR SEALING MULTI-FORMAT TRAYS

(30) Priorité: 18.05.2017 FR 1754391
(43) Date de publication de la demande: 21.11.2018
(73) Titulaire: Guelt, 29300 Quimperle (FR)
(72) Inventeur: KERNEN, Samuel, 29300 Quimperle (FR)
(74) Mandataire: Novagraaf Technologies

(56) Documents cités:
- EP-A1- 0 680 880
- WO-A1-2012/080932
- WO-A1-2012/107668
- FR-A1- 2 963 322
- FR-A1- 2 975 081

## Description

### 1. Domaine de l'invention

L'invention concerne une machine d'operculage destinée à operculer des barquettes de taille différentes contenant des produits.

### 2. Art antérieur

Classiquement, les machines d'operculage de barquettes multiformats comportent un outillage supérieur comportant une plaque de soudure multiformat et une série de n outillages inférieurs placés de manière à être adjacents deux à deux dans un chariot mobile. Chaque outillage inférieur comporte une embase de soudure adaptée à un format de contenant. Le chariot est déplacé de sorte à placer sous l'outillage supérieur, l'un des outillages inférieurs de la série présentant le format d'operculage souhaité. L'outillage inférieur ainsi placé en poste est alors dit en service. Un dispositif de montée de poste situé à la verticale de l'outillage supérieur déplace l'outillage inférieur en service, entre une position de repos à distance de l'outillage supérieur et une position d'operculage dans laquelle l'outillage inférieur coopère avec l'outillage supérieur pour sceller le film par application de l'embase de soudure sur la plaque de soudure.

Toutefois, de telles machines représentent un encombrement important sur un lieu de production en raison de la course du chariot de part et d'autre de la position en poste. En effet, pour n outillages inférieurs de même largeur, le débattement entre des positions extrêmes est de l'ordre de (2n-1) fois la largeur d'un outillage inférieur. Par ailleurs, le fait d'avoir une plaque de soudure multiformat limite les formats compatibles pour une même machine dans la mesure où les formats doivent pouvoir s'imbriquer. La présence d'une plaque de soudure multiformat limite également la cadence d'operculage.

Les documents WO 2012/080932, EP0680880, FR2975081, FR2963322 et WO2012/107668 donnent des informations concernant l'arrière-plan technologique de l'invention.

### 1. Objectifs de l'invention

L'invention propose une solution visant à pallier les inconvénients précités. Un objectif de l'invention est de fournir des machines d'operculage de barquettes qui présentent un encombrement réduit pour un même nombre d'outillages inférieurs afin de pouvoir rationaliser les lieux de production recevant des machines d'operculage de barquettes. Par ailleurs, l'invention vise également à permettre la réalisation d'une machine sans limitation concernant les formats compatibles, notamment sans limitation d'imbrication de format mais également une machine présentant une cadence élevée et permettant un changement de format rapide tout en laissant la possibilité d'automatiser à la fois l'operculage et le changement de format.

### 2. Résumé de l'invention

L'invention concerne une machine d'operculage de contenants, notamment de barquettes, permettant de sceller par soudure thermique un film sur les contenants et leur contenu, la machine comprenant :
un châssis,
des moyens de déroulement du film d'operculage,
une série d'équipements positionnés de manière à être adjacents deux à deux, chaque équipement étant adapté à un format de contenant et comportant :
   un outillage supérieur, fixe par rapport au châssis de la machine, comportant une plaque de soudure,
   un outillage inférieur comportant une embase de soudure, lequel outillage inférieur étant mobile entre une position de repos à distance de l'outillage supérieur et une position d'operculage dans laquelle l'outillage inférieur coopère avec l'outillage supérieur pour sceller le film par application de l'embase de soudure sur la plaque de soudure,
un dispositif de montée de poste commun à tous les équipements et agencé pour déplacer l'un des outillages inférieurs, dit en service, entre la position de repos et la position d'operculage, et
des moyens de déplacement du dispositif de montée de poste d'un outillage inférieur à un autre de la série d'équipements.

On entend par outillage inférieur en service un outillage inférieur sélectionné pour réaliser l'operculage en cours. Une telle machine d'operculage présente l'avantage de permettre d'operculer des barquettes de formats différents tout en représentant un encombrement réduit. Elle permet un changement de format rapide. Par ailleurs, elle n'impose pas que les formats pris en charge par la machine soient imbricables. De plus, la structure de telle machine est robuste et le fonctionnement simple et intuitif.

Selon une réalisation particulière de l'invention, pour chaque équipement
l'outillage supérieur comporte une cloche, et
l'outillage inférieur comporte une cuve de manière qu'en position d'operculage, la cloche et la cuve coopèrent pour former une enceinte adaptée à la modification d'atmosphère dans une barquette, par exemple une mise sous vide et une injection de gaz. La modification d'atmosphère permet une meilleure conservation du contenu.

En variante, pour chaque équipement, l'outillage supérieur comporte une cloche et le dispositif de montée de poste comporte une cuve de manière qu'en position d'operculage, la cloche et la cuve coopèrent pour former une enceinte adaptée à la modification d'atmosphère dans une barquette, par exemple une mise sous vide et une injection de gaz.

Selon une réalisation particulière de l'invention, la machine comporte en outre un dispositif de mise sous vide de l'enceinte. La mise sous vide constitue par exemple une étape préalable à l'injection de gaz dans l'opération de modification d'atmosphère. En variante, la machine est utilisée pour réaliser un emballage sous vide, sans injection de gaz, notamment pour des emballages réalisés par pelliplaquage, ou « skin packaging » selon l'expression anglo-saxonne. Le pelliplaquage consiste à plaquer le film sur le produit et à souder le film à la barquette.

Selon une réalisation particulière de l'invention, la machine comporte en outre un dispositif d'injection de gaz dans l'enceinte. L'injection de gaz permet après une mise sous vide, le remplacement de l'air initialement présent dans l'environnement du contenu afin d'en assurer une bonne conservation et d'assurer une pression atmosphérique autour du contenu suffisante pour éviter au film d'operculage d'être plaquer sur le contenu.

Selon une réalisation particulière de l'invention, chaque équipement comporte une lame de coupe permettant de réaliser la découpe du film d'operculage autour de la barquette une fois la soudure réalisée. Selon une première réalisation, la lame de coupe est montée dans l'outillage supérieur. Selon une deuxième réalisation, la lame de coupe est montée dans l'outillage inférieur.

Selon une réalisation particulière de l'invention, la cuve comporte un plateau éjecteur actionné par le dispositif de montée de poste et agencé pour pousser une barquette hors d'un outillage inférieur. Le plateau présente une position basse dans laquelle une barquette présente dans l'outillage inférieur en service repose sur l'embase de soudure, et une position haute dans laquelle la barquette est soulevée de manière que ses bords sont décollés de l'embase de soudure et que le fond de la barquette affleure le niveau des bords de soudure.

Selon une réalisation particulière de l'invention, les outillages inférieurs de la série d'équipements sont montés sur un tiroir. Pour changer un outillage inférieur, par exemple dans l'objectif de permettre à la machine de prendre en charge un nouveau format de contenant, un utilisateur ouvre le tiroir et remplace un outillage inférieur par un outillage inférieur du nouveau format souhaité.

Selon une réalisation particulière, chaque outillage inférieur de la série d'équipements est monté dans un tiroir qui lui est dédié. Pour changer un outillage inférieur, par exemple dans l'objectif de permettre à la machine de prendre en charge un nouveau format de contenant, un utilisateur retire un tiroir en place et le remplace par un tiroir comportant un outillage inférieur du nouveau format souhaité.

Selon une réalisation particulière de l'invention, la machine comprend un seul tiroir recevant l'un quelconque des outils inférieurs, le tiroir étant monté sur un dispositif de déplacement perpendiculaire au sens de coulissement du tiroir.

Selon une réalisation particulière de l'invention, le tiroir est monté sur un dispositif de déplacement synchronisé avec les moyens de déplacement du dispositif de montée de poste.

Selon une réalisation particulière de l'invention, le dispositif de montée de poste est monté sur des moyens formant glissière. La glissière est agencée pour permettre un coulissement du dispositif de montée de poste d'un outillage inférieur à l'autre de la série d'équipements.

Selon une réalisation particulière de l'invention, la machine comporte une motorisation des moyens de déplacement du dispositif de montée de poste. La motorisation des moyens de déplacement du dispositif de montée de poste permet de s'affranchir d'un déplacement manuel du dispositif de montée de poste.

Selon une réalisation particulière de l'invention, la machine comporte un système de préhension de contenants présentant un état de prise dans lequel un contenant est saisi par le système de préhension et un état de relâche dans lequel un contenant après avoir été saisi est relâché, le système de préhension étant mobile entre une position d'arrivée des contenants et plusieurs positions d'operculage correspondant respectivement aux emplacements d'un contenant dans les équipements de la série d'équipements. Un tel système de préhension permet d'acheminer une barquette à operculer jusque dans l'outillage inférieur en service en s'affranchissant d'une intervention humaine.

Selon une réalisation particulière de l'invention, la machine comporte en outre un convoyeur aval à bande sans fin rétractable destiné à transporter des contenants operculés sur son brin supérieur depuis l'outillage inférieur en service jusqu'à la sortie de la machine et agencé de manière à recouvrir les outillages inférieurs en position de repos situés en aval de l'outillage inférieur en service.

On entend par sortie de la machine, l'espace par lequel sortent les barquettes une fois operculées. On entend par entrée de la machine, l'espace par lequel entrent les barquettes en vue d'être operculées. On entend par aval la direction pointant de l'entrée vers la sortie de la machine et par amont la direction pointant de la sortie vers l'entrée de la machine.

On entend par convoyeur rétractable, un convoyeur escamotable ou déplaçable longitudinalement selon une direction d'élongation de la machine ou pouvant être raccourci et allongé.

Le caractère rétractable du convoyeur aval permet d'adapter la longueur du convoyeur aval au nombre d'outillages inférieurs à recouvrir pour transporter une barquette operculée depuis l'outillage supérieur en service jusqu'à la sortie de la machine.

Selon une réalisation particulière de l'invention, la machine comporte en outre un convoyeur amont à bande sans fin rétractable destiné à transporter des contenants à operculer sur son brin supérieur depuis l'entrée de la machine jusqu'à la position d'arrivée des contenants et agencé de manière à recouvrir les outillages inférieurs en position de repos situés en amont de l'outillage inférieur en service.

Le caractère rétractable du convoyeur amont permet d'adapter la longueur du convoyeur amont au nombre d'outillages inférieurs à recouvrir pour transporter une barquette à operculer depuis l'entrée de la machine jusqu'à la position d'arrivée, c'est-à-dire la position dans laquelle la barquette est saisie par le système de préhension.

Selon une réalisation particulière de l'invention, le convoyeur aval et/ou le convoyeur amont comprend/comprennent une liaison solidaire avec le dispositif de montée de poste. La liaison solidaire du convoyeur aval et/ou amont avec le dispositif de montée de poste permet de réaliser un déploiement ou une rétractation du convoyeur aval et/ou amont par l'intermédiaire du dispositif de montée de poste qui dans son déplacement entraîne une partie du convoyeur aval et/ou amont en liaison avec le dispositif de montée de poste.

Selon une réalisation particulière de l'invention, le caractère rétractable est obtenu par imbrication de portions du convoyeur et absorption du brin mou. Le convoyeur comporte une structure pour supporter la bande du convoyeur composée de plusieurs portions imbriquées les unes dans les autres et agencées pour coulisser les unes par rapport aux autres de manière à ce que la longueur selon laquelle une portion est emboîtée dans la précédente puisse varier. Le brin mou de la bande est absorbé par un système de renvoi prolongeant le parcours de la bande du convoyeur au-delà de la structure, le système de renvoi s'écartant plus ou moins de manière à faire varier la longueur du parcours de la bande du convoyeur au-delà de la structure pour assurer une tension constante dans la bande.

Selon une réalisation particulière de l'invention, la machine comporte des moyens de détection d'un format de barquette à operculer. Les moyens de détection d'un format de barquette à operculer permettent de s'affranchir d'une intervention humaine pour identifier le format d'une barquette à operculer.

Selon une réalisation particulière de l'invention, la machine comporte en outre un automate de pilotage de la machine. L'automate de pilotage permet un fonctionnement tout automatique de la machine, c'est-à-dire que l'operculage ainsi que le changement de format se font sans intervention humaine.

### 5. Liste des figures

D'autres caractéristiques et avantages innovants ressortiront de la description ci-après, fournie à titre indicatif et nullement limitatif, en référence aux dessins annexés, dans lesquels :
- La figure 1 représente une vue schématique de face d'une machine d'operculage de barquettes selon un premier mode de réalisation de l'invention ;
- Les figures 2a et 2b représentent une vue schématique de côté de la machine d'operculage de la figure 1 dans deux positions du tiroir supportant les outillages inférieurs ;
- La figure 3 représente une vue schématique de face d'une machine d'operculage de barquettes selon un deuxième mode de réalisation de l'invention,
- Les figures 4a et 4b représentent une vue schématique de côté de la machine d'operculage de la figure 3 dans deux positions du tiroir supportant les outillages inférieurs ;
- La figure 5 représente une vue schématique de face de la machine d'operculage de la figure 3, le dispositif de montée de poste plaçant un outillage inférieur dit en service dans la position d'operculage ;
- La figure 6 représente une vue schématique de face de la machine d'operculage de la figure 3 après déplacement du dispositif de montée de poste jusqu'à un autre outillage inférieur ; et
- Les figures 7a à 7c représentent une vue schématique de côté d'un convoyeur rétractable amont ou aval respectivement dans un état déployé, dans un état intermédiaire et dans un état rétracté.

### 6. Description détaillée

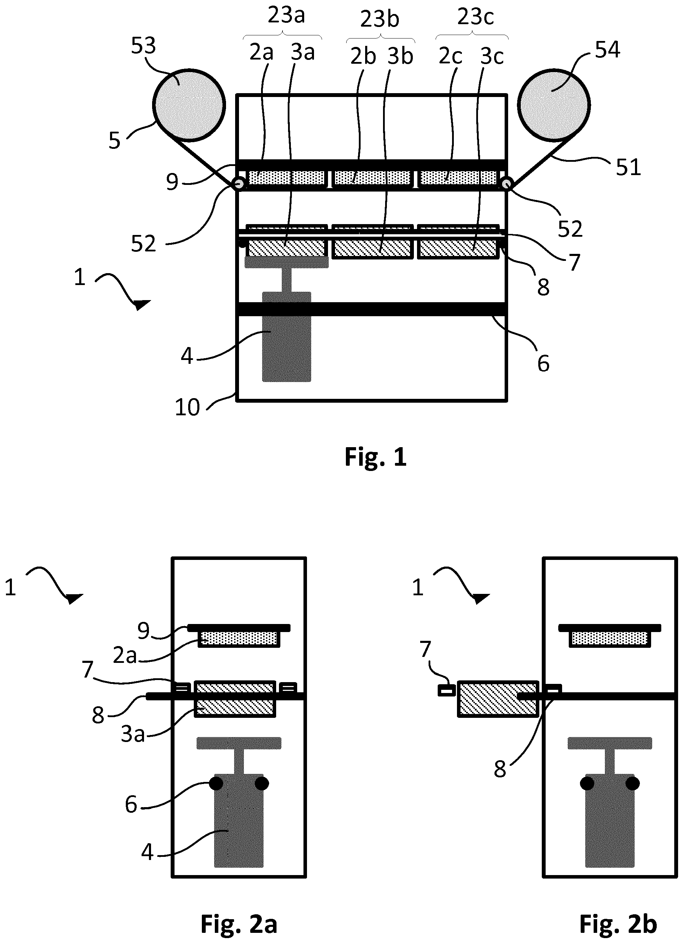

Aux figures 1 à 2b est représenté un premier mode de réalisation d'une machine 1 d'operculage de contenants C, notamment de barquettes, selon l'invention.

La machine comporte :
- un châssis 10,
- une série de n équipements 23a, 23b, 23c, chaque équipement étant adapté à un format de barquette,
- un dispositif de montée de poste 4,
- des moyens de déroulement 5 du film d'operculage 51.

Une telle machine 1 d'operculage de barquettes est dite semi-automatique dans la mesure où l'introduction des barquettes dans l'outillage est manuelle et le mécanisme d'operculage de barquettes est automatique.

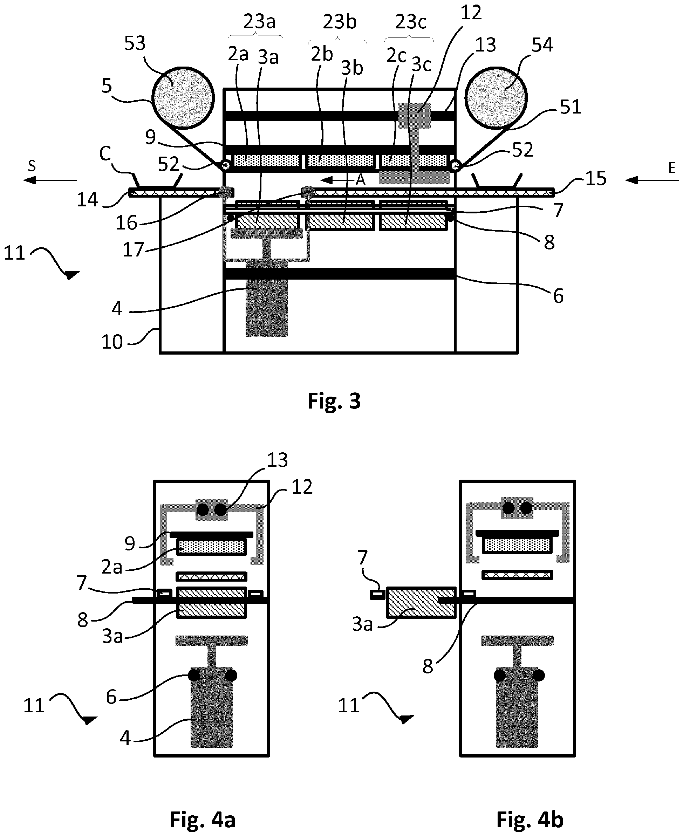

Aux figures 3 à 6 est représenté un deuxième mode de réalisation d'une machine 11 d'operculage de barquettes selon l'invention. La machine comporte les mêmes éléments que la machine 1 d'operculage de barquettes c'est-à-dire :
- un châssis 10,
- une série de n équipements 23a, 23b, 23c ;
- un dispositif de montée de poste 4,
- des moyens de déroulement 5 du film d'operculage 51.

La machine 11 d'operculage de barquettes comporte en outre :
- un système de préhension de barquette,
- un convoyeur aval,
- un convoyeur amont.

Une telle machine 11 d'operculage de barquettes est dite tout automatique dans la mesure où l'introduction des barquettes dans l'outillage et le mécanisme d'operculage sont automatiques.

Dans un premier temps, les éléments communs aux machines 1 et 11 d'operculage sont décrits.

Dans les exemples illustrés, la machine comporte trois équipements 23a, 23b, 23c. De manière classique, (n) est compris entre deux et cinq sans toutefois que cela soit limitatif. Les équipements 23a, 23b, 23c sont positionnés de manière à être adjacents deux à deux, c'est-à-dire qu'ils sont alignés côte à côte selon une direction d'élongation horizontale de la machine. La direction verticale correspond à la direction qui pointe vers le haut des figures et le plan horizontal est perpendiculaire à la direction verticale.

Chaque équipement 23a, 23b ou 23c comporte :
- un outillage supérieur 2a, 2b ou 2c, et
- un outillage inférieur 3a, 3b ou 3c.

Chaque outillage supérieur 2a, 2b, 2c comporte classiquement une plaque mono format, c'est-à-dire qu'elle ne permet d'operculer qu'un seul format prédéterminé de barquettes. Les outillages supérieurs 2a, 2b, 2c sont fixés de manière amovible à un support 9 de manière à permettre le remplacement d'un outillage supérieur par un autre outillage supérieur correspondant à un format différent.

Chaque outillage inférieur 3a, 3b, 3c comporte une embase de soudure dont les dimensions sont adaptée à un format prédéterminé de barquette à operculer, l'embase de soudure étant destinée à coopérer avec la plaque de soudure de l'outillage supérieur 2a, 2b, 2c du même équipement afin de réaliser l'operculage de la barquette à operculer.

En référence plus particulièrement aux figures 2a, 2b, 4a et 4b, la série d'outillages inférieurs 3a, 3b, 3c est posée dans un tiroir 7 coulissant le long de coulisses 8. En variante de réalisation, la machine d'operculage de barquettes 1 selon l'invention comporte autant de tiroirs 7 que d'outillages inférieurs 3a, 3b, 3c, ce qui permet de rendre indépendant les différents outillages inférieurs 3a, 3b, 3c. Ainsi, il est possible d'intervenir sur un outillage inférieur 3a, 3b, 3c pendant qu'un autre outillage inférieur 3a, 3b, 3c est en cours d'utilisation pour l'operculage d'une barquette qu'il contient. En variante de réalisation, le tiroir 7 est motorisé.

Dans chaque équipement 23a, 23b, 23c, l'outillage supérieur 2a, 2b, 2c comporte une cloche, et l'outillage inférieur 3a, 3b, 3c comporte une cuve de manière qu'en position d'operculage, la cloche et la cuve coopèrent pour former une enceinte étanche adaptée à la modification d'atmosphère dans une barquette, par exemple une mise sous vide et/ou une injection de gaz. Cela permet de réaliser l'operculage de la barquette dans une atmosphère contrôlée.

En variante, pour chaque équipement, l'outillage supérieur comporte une cloche et le dispositif de montée de poste comporte une cuve de manière qu'en position d'operculage, la cloche et la cuve coopèrent pour former une enceinte étanche adaptée à la modification d'atmosphère.

Ainsi, la machine comporte un dispositif de mise sous vide de l'enceinte apte à être connecté à la cloche de chaque outillage supérieur. De manière analogue, la machine comporte un dispositif d'injection de gaz dans l'enceinte apte à être connecté à la cloche de chaque outillage supérieur.

Chaque équipement comporte une lame de coupe permettant de réaliser la découpe du film d'operculage autour de la barquette une fois la soudure réalisée. Selon une première réalisation, la lame de coupe est montée sur l'outillage supérieur. Selon une deuxième réalisation, la lame de coupe est montée sur l'outillage inférieur.

La cuve de chaque outillage inférieur 3a, 3b, 3c comporte un plateau éjecteur actionné par le dispositif de montée de poste et agencé pour pousser une barquette hors d'un outillage inférieur. Le plateau présente une position basse dans laquelle une barquette présente dans l'outillage inférieur en service repose sur l'embase de soudure, et une position haute dans laquelle la barquette est soulevée de manière que ses bords sont décollés de l'embase de soudure et que le fond de la barquette affleure le niveau des bords de soudure.

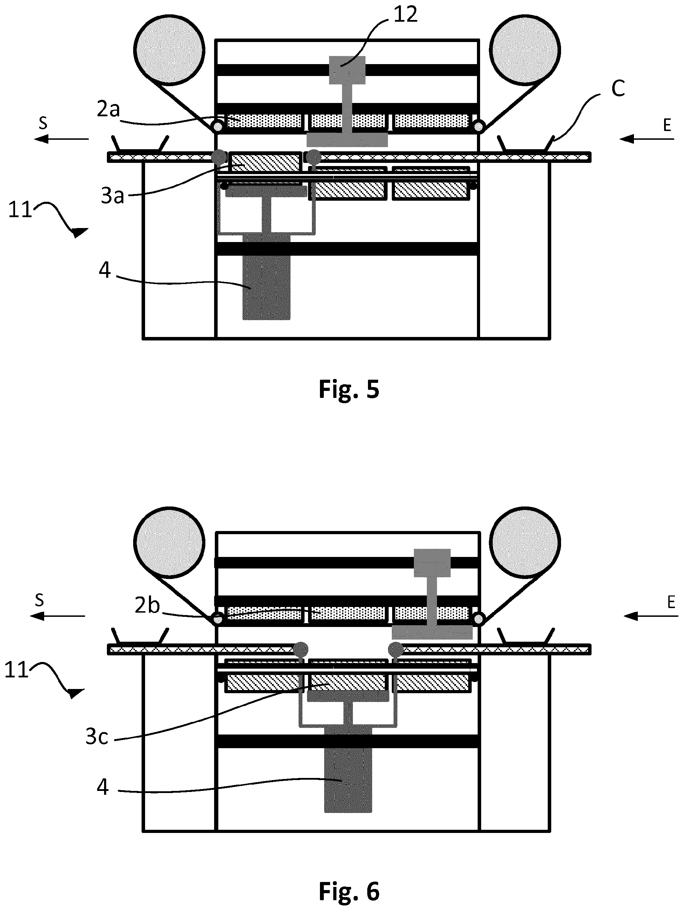

Concernant le dispositif de montée de poste 4, ce dernier est déplaçable d'un outillage inférieur 3a, 3b, 3c à un autre outillage inférieur 3a, 3b, 3c de la série d'équipements 23a, 23b, 23c comme cela est illustré aux figures 3 et 6, à l'aide des moyens de déplacement de la machine d'operculage de barquettes 1 selon l'invention. Par exemple, le dispositif de montée de poste 4 est monté sur des moyens formant glissière 6 de sorte à pouvoir subir un déplacement au-dessous des différents outillages inférieurs 3a, 3b, 3c. En variante de réalisation, la machine d'operculage de barquettes 1 selon l'invention comporte des moyens de motorisation d'un déplacement du dispositif de montée de poste 4.

En référence aux figures 3 et 5, le dispositif de montée de poste 4, en utilisation, active un mouvement de l'outillage inférieur 3a, 3b, 3c au-dessous duquel il est positionné par montée vers ou descente depuis l'outillage supérieur 2a, 2b, 2c.

Selon une autre variante de réalisation (non représentée), la machine d'operculage de barquette 1 comprend un seul tiroir 7 recevant l'un quelconque des outils inférieurs 3a, 3b, 3c. Les outils inférieurs 3a, 3b, 3c peuvent être mis en place manuellement dans le tiroir 7 en manœuvrant le tiroir sur la coulisse 8. Le tiroir 7 est monté sur un dispositif de déplacement perpendiculaire au sens de coulissement du tiroir 7. Le dispositif de déplacement du tiroir 7 est synchronisé avec le dispositif de monté de poste 4 de sorte que l'outil inférieur 3a, 3b, 3c disposé dans le tiroir 7 soit positionné à l'aplomb de l'outil supérieur 2a, 2b, 2c correspondant lorsque le dispositif de monté de poste 4 est activé.

Concernant les moyens de déroulement 5 d'un film d'operculage 51, ceux-ci comprennent un mandrin enrouleur 53 et un support de bobine 54. Pour assurer le bon déroulement du film d'operculage 51, les moyens de déroulement 5 comportent un ensemble de rouleaux de renvoi 52. Les moyens de déroulement 5 sont positionnés sur le châssis de la machine d'operculage de barquettes 1 selon l'invention. Le mandrin enrouleur 53 et le support de bobine 54 sont située de part et d'autre de la série d'équipements 23a, 23b, 23c de sorte à ce que le film d'operculage 51 s'étende tout le long de ce chemin de déplacement en regard des outillages inférieurs 3a, 3b, 3c de la série d'équipements 23a, 23b, 23c. Le bon positionnement du film d'operculage 51 en regard des outillages inférieurs 3a, 3b, 3c de la série d'équipements 23a, 23b, 23c est assuré par les différents rouleaux de renvoi 52.

Selon un autre mode de réalisation non représenté, les moyens de déroulement 5 du film d'operculage 51 sont aptes à se déplacer transversalement de façon synchronisé avec le dispositif de monté de postes 4. Ainsi, le film d'operculage n'est pas chauffé sous les outillages supérieurs 2a, 2b, 2c non utilisés.

A présent, les éléments propres à la machine 11 d'operculage de barquettes sont décrits.

La machine 11 comporte un système de préhension de barquettes 12 présentant un état de prise dans lequel une barquette est saisie par le système de préhension et un état de relâche dans lequel une barquette après avoir été saisie est relâchée, le système de préhension 12 étant mobile le long d'un rail 13 entre une position d'arrivée des barquettes et plusieurs positions d'operculage correspondant respectivement aux emplacements d'une barquette dans les équipements de la série d'équipements.

Le convoyeur amont 15 est un convoyeur à bande sans fin rétractable destiné à transporter des barquettes à operculer sur son brin supérieur depuis l'entrée E de la machine jusqu'à la position d'arrivée A des barquettes. Le convoyeur amont 15 est agencé de manière à recouvrir les outillages inférieurs en position de repos situés en amont de l'outillage inférieur en service.

En variante, la machine d'operculage de barquettes ne comprend pas de convoyeur amont et l'opérateur dépose manuellement les barquettes dans l'outillage inférieur monté sur tiroir.

Le convoyeur aval 14 est un convoyeur à bande sans fin rétractable destiné à transporter des barquettes operculées sur son brin supérieur depuis l'outillage inférieur en service jusqu'à la sortie S de la machine. Le convoyeur aval 14 est agencé de manière à recouvrir les outillages inférieurs en position de repos situés en aval de l'outillage inférieur en service.

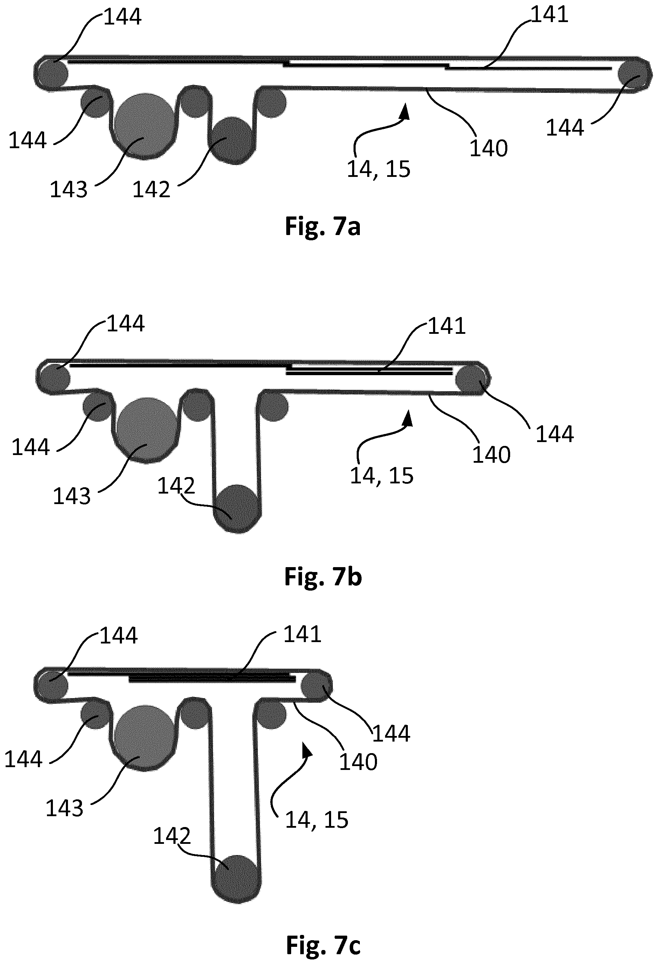

En référence plus particulièrement aux figures 7a à 7c, le convoyeur amont 15 ou le convoyeur aval 14 comporte de manière classique un rouleau d'entraînement 143 de la bande 140 et plusieurs éléments de renvoi 144. Pour réaliser le caractère rétractable, le convoyeur comporte en outre une structure 141 pour supporter la bande du convoyeur composée de plusieurs portions imbriquées les unes dans les autres et agencées pour coulisser les unes par rapport aux autres de manière à ce que la longueur selon laquelle une portion est emboîtée dans la précédente puisse varier. Le brin mou de la bande est absorbé par un système de contrepoids 142 s'écartant plus ou moins de manière à faire varier la longueur du parcours de la bande du convoyeur au-delà de la structure pour assurer une tension constante dans la bande 140.

Le convoyeur aval et le convoyeur amont comprennent une liaison solidaire avec le dispositif de montée de poste. Plus précisément, le dispositif de montée de poste comporte une liaison solidaire 16 avec une extrémité amont du convoyeur aval et une liaison solidaire 17 avec une extrémité aval du convoyeur amont. Le dispositif de montée de poste 4 entraîne ainsi dans son déplacement l'extrémité amont du convoyeur aval et l'extrémité aval du convoyeur amont de manière qu'un déplacement vers l'amont entraîne la rétractation du convoyeur amont et le déploiement du convoyeur aval et qu'un déplacement vers l'aval entraîne la rétractation du convoyeur aval et le déploiement du convoyeur amont.

Comme indiqué précédemment, les différents éléments de la machine 1 ou 11 d'operculage de barquettes peuvent être motorisés. Dans cette situation, la machine 1 ou 11 d'operculage de barquettes comprend un automate de pilotage. De plus, la machine 1 ou 11 d'operculage de barquettes comporte des moyens de détection d'un format de barquette à operculer placés par exemple en entrée de machine. Ces moyens de détection envoient une information de format de la barquette à operculer à l'automate de pilotage. L'automate de pilotage commande alors le déplacement du dispositif de montée de poste jusqu'à l'équipement correspondant au format détecté.

## Revendications

1. Machine (1, 11) d'operculage de contenants (C), notamment de barquettes, permettant de sceller par soudure thermique un film (51) sur les contenants (C) et leur contenu, la machine (1, 11) comprenant :
- un châssis (10),
- des moyens de déroulement (5) du film (51) d'operculage,
- une série d'équipements (23a, 23b, 23c) positionnés de manière à être adjacents deux à deux, chaque équipement étant adapté à un format de contenant
la machine (1, 11) étant **caractérisée en ce que** chaque équipement (23a, 23b, 23c) comporte :
• un outillage supérieur (2a, 2b, 2c) comportant une plaque de soudure,
• un outillage inférieur (3a, 3b, 3c) comportant une embase de soudure, lequel outillage inférieur étant mobile entre une position de repos à distance de l'outillage supérieur et une position d'operculage dans laquelle l'outillage inférieur coopère avec l'outillage supérieur pour sceller le film (51) par application de l'embase de soudure contre la plaque de soudure,
la machine (1, 11) comportant en outre :
- un dispositif de montée de poste (4) agencé pour déplacer l'un des outillages inférieurs(3a, 3b, 3c), dit en service, entre la position de repos et la position d'operculage, et
- des moyens de déplacement du dispositif de montée de poste (4) d'un outillage inférieur (3a, 3b, 3c) à un autre de la série d'équipements (23a, 23b, 23c).

2. Machine (1, 11) selon la revendication 1 **caractérisée en ce que** le dispositif de montée de poste (4) est monté sur des moyens formant glissière (6) .

3. Machine (1, 11) selon l'une quelconque des revendications précédentes **caractérisée en ce que** les outillages inférieurs (3a, 3b, 3c) de la série d'équipements (23a, 23b, 23c) sont montés sur un tiroir (7).

4. Machine (1, 11) selon la revendication 1 ou 2, **caractérisée en ce qu'**elle comprend un seul tiroir 7 recevant l'un quelconque des outils inférieurs (3a, 3b, 3c), le tiroir (7) étant monté sur un dispositif de déplacement perpendiculaire au sens de coulissement du tiroir (7).

5. Machine (1, 11) selon la revendication 3 ou 4, **caractérisée en ce que** le tiroir (7) est monté sur un dispositif de déplacement synchronisé avec les moyens de déplacement du dispositif de montée de poste (4).

6. Machine (1, 11) selon l'une quelconque des revendications précédentes **caractérisée en ce qu'**elle comporte une motorisation des moyens de déplacement du dispositif de montée de poste (4).

7. Machine (11) selon l'une quelconque des revendications précédentes **caractérisée en ce qu'**elle comporte un système de préhension (12) de contenant (C) présentant un état de prise dans lequel un contenant (C) est saisi par le système de préhension (12) et un état de relâche dans lequel un contenant (C) après avoir été saisi est relâché, le système de préhension (12) étant mobile entre une position d'arrivée des contenants (C) et plusieurs positions d'operculage correspondant respectivement aux emplacements d'un contenant (C) dans les équipements de la série d'équipements (23a, 23b, 23c).

8. Machine (11) selon l'une quelconque des revendications précédentes **caractérisée en ce qu'**elle comporte en outre un convoyeur aval (14) à bande sans fin rétractable destiné à transporter des contenants operculés sur son brin supérieur jusqu'à la sortie de la machine et agencé de manière à recouvrir les outillages inférieurs (3a, 3b, 3c) en position de repos situés en aval de l'outillage inférieur en service.

9. Machine (11) selon la revendication 8 **caractérisée en ce qu'**elle comporte en outre un convoyeur amont (15) à bande sans fin rétractable destiné à transporter des contenants à operculer sur son brin supérieur depuis l'entrée de la machine jusqu'à la position d'arrivée des contenants et agencé de manière à recouvrir les outillages inférieurs (3a, 3b, 3c) en position de repos situés en amont de l'outillage inférieur en service.

10. Machine selon les revendications 8 et/ou 9 **caractérisée en ce que** le convoyeur aval (14) et/ou le convoyeur amont (15) comprend/comprennent une liaison solidaire (16, 17) avec le dispositif de montée de poste (4).

11. Machine selon les revendications 8 et/ou 9 **caractérisée en ce que** le caractère rétractable est obtenu par imbrication de portions du convoyeur et absorption du brin mou.

12. Machine selon les revendications 8 et 9, **caractérisée en ce que** le convoyeur amont (15) et le convoyeur aval (14) comportent une bande commune.

## Patentansprüche

1. Maschine (1, 11) zum Versiegeln von Behältern (C), insbesondere von Schalen, die es ermöglicht, die Behälter (C) und ihren Inhalt durch thermisches Schweißen mit einer Folie (51) zu versiegeln, wobei die Maschine (1, 11) umfasst:
- ein Gestell (10),
- Mittel zum Abwickeln (5) der Folie (51) zum Versiegeln,
- eine Reihe von Einrichtungen (23a, 23b, 23c), die so positioniert sind, dass sie paarweise benachbart sind, wobei jede Einrichtung an ein Behälterformat angepasst ist,
wobei die Maschine (1, 11) **dadurch gekennzeichnet ist, dass** jede Einrichtung (23a, 23b, 23c) aufweist:
• ein Oberwerkzeug (2a, 2b, 2c), das eine Schweißplatte aufweist,
• ein Unterwerkzeug (3a, 3b, 3c), das einen Schweißsockel aufweist, wobei das Unterwerkzeug zwischen einer vom Oberwerkzeug entfernten Ruheposition und einer Versiegelungsposition, in welcher das Unterwerkzeug mit dem Oberwerkzeug zusammenwirkt, um das Versiegeln mit der Folie (51) durch Andrücken des Schweißsockels an die Schweißplatte zu bewirken, beweglich ist,
wobei die Maschine (1, 11) außerdem aufweist:
- eine Stationshebevorrichtung (4), die dafür ausgelegt ist, eines der Unterwerkzeuge (3a, 3b, 3c), als in Betrieb befindlich bezeichnet, zwischen der Ruheposition und der Versiegelungsposition zu verlagern, und
- Mittel zur Verlagerung der Stationshebevorrichtung (4) von einem Unterwerkzeuge (3a, 3b, 3c) zu einem anderen von der Reihe von Einrichtungen (23a, 23b, 23c).

2. Maschine (1, 11) nach Anspruch 1, **dadurch gekennzeichnet, dass** die Stationshebevorrichtung (4) auf Mitteln, die eine Gleitschiene bilden (6), angebracht ist.

3. Maschine (1, 11) nach einem der vorhergehenden Ansprüche, **dadurch gekennzeichnet, dass** die Unterwerkzeuge (3a, 3b, 3c) der Reihe von Einrichtungen (23a, 23b, 23c) auf einem Schieber (7) angebracht sind.

4. Maschine (1, 11) nach Anspruch 1 oder 2, **dadurch gekennzeichnet, dass** sie einen einzigen Schieber (7) umfasst, der ein beliebiges der Unterwerkzeuge (3a, 3b, 3c) aufnimmt, wobei der Schieber (7) auf einer Vorrichtung zur Verlagerung senkrecht zur Gleitrichtung des Schiebers (7) angebracht ist.

5. Maschine (1, 11) nach Anspruch 3 oder 4, **dadurch gekennzeichnet, dass** der Schieber (7) auf einer Vorrichtung zur Verlagerung angebracht ist, die mit den Mitteln zur Verlagerung der Stationshebevorrichtung (4) synchronisiert ist.

6. Maschine (1, 11) nach einem der vorhergehenden Ansprüche, **dadurch gekennzeichnet, dass** sie eine Motorisierung der Mittel zur Verlagerung der Stationshebevorrichtung (4) aufweist.

7. Maschine (11) nach einem der vorhergehenden Ansprüche, **dadurch gekennzeichnet, dass** sie ein System zum Greifen (12) eines Behälters (C) umfasst, das einen Greifzustand, in welchem ein Behälter (C) von dem Greifsystem (12) erfasst worden ist, und einen Freigabezustand, in welchem ein Behälter (C), nachdem er erfasst wurde, freigegeben worden ist, aufweist, wobei das Greifsystem (12) zwischen einer Position des Eintreffens der Behälter (C) und mehreren Versiegelungspositionen, die jeweiligen Orten eines Behälters (C) in den Einrichtungen der Reihe von Einrichtungen (23a, 23b, 23c) entsprechen, beweglich ist.

8. Maschine (11) nach einem der vorhergehenden Ansprüche, **dadurch gekennzeichnet, dass** sie außerdem einen stromabwärtigen zusammenschiebbaren Endlosbandförderer (14) aufweist, der dazu bestimmt ist, versiegelte Behälter auf seinem Obertrum bis zum Austritt aus der Maschine zu transportieren, und so gestaltet ist, dass er die in der Ruheposition befindlichen Unterwerkzeuge (3a, 3b, 3c), die dem in Betrieb befindlichen Unterwerkzeug nachgelagert sind, bedeckt.

9. Maschine (11) nach Anspruch 8, **dadurch gekennzeichnet, dass** sie außerdem einen stromaufwärtigen zusammenschiebbaren Endlosbandförderer (15) aufweist, der dazu bestimmt ist, zu versiegelnde Behälter auf seinem Obertrum vom Eintritt in die Maschine bis zur Position des Eintreffens der Behälter zu transportieren, und so gestaltet ist, dass er die in der Ruheposition befindlichen Unterwerkzeuge (3a, 3b, 3c), die dem in Betrieb befindlichen Unterwerkzeug vorgelagert sind, bedeckt.

10. Maschine nach den Ansprüchen 8 und/oder 9, **dadurch gekennzeichnet, dass** der stromabwärtige Förderer (14) und/oder der stromaufwärtige Förderer (15) eine feste Verbindung (16, 17) mit der Stationshebevorrichtung (4) umfassen/umfasst.

11. Maschine nach den Ansprüchen 8 und/oder 9, **dadurch gekennzeichnet, dass** der zusammenschiebbare Charakter durch Verschachtelung von Abschnitten des Förderers und Aufnahme des schlaffen Trums erzielt wird.

12. Maschine nach den Ansprüchen 8 und 9, **dadurch gekennzeichnet, dass** der stromaufwärtige Förderer (15) und der stromabwärtige Förderer (14) ein gemeinsames Band aufweisen.

## Claims

1. Machine (1, 11) for applying membrane seals to containers (C), in particular trays, with which it is possible to seal by thermal welding a film (51) over the containers (C) and their contents, the machine (1, 11) comprising:
- a chassis (10),
- means (5) for unwinding the membrane seal film (51),
- a series of equipment items (23a, 23b, 23c) positioned so as to be adjacent in pairs, each equipment item being suited to a container format, the machine (1, 11) being **characterized in that** each equipment item (23a, 23b, 23c) comprises:
• an upper tooling (2a, 2b, 2c) comprising a welding plate,
• a lower tooling (3a, 3b, 3c) comprising a welding base, which lower tooling is able to move between a rest position remote from the upper tooling and a membrane seal application position in which the lower tooling cooperates with the upper tooling to seal the film (51) by pressing the welding base against the welding plate,
the machine (1, 11) further comprising:
- a station raising device (4) which is arranged to move one of the lower toolings (3a, 3b, 3c), which is said to be in service, between the rest position and the membrane seal application position, and
- means for moving the station raising device (4) from one lower tooling (3a, 3b, 3c) to another of the series of equipment items (23a, 23b, 23c).

2. Machine (1, 11) according to Claim 1, **characterized in that** the station raising device (4) is mounted on means forming a slide (6).

3. Machine (1, 11) according to either one of the preceding claims, **characterized in that** the lower toolings (3a, 3b, 3c) of the series of equipment items (23a, 23b, 23c) are mounted on a slider (7).

4. Machine (1, 11) according to Claim 1 or 2, **characterized in that** it comprises a single slider (7) receiving any one of the lower tools (3a, 3b, 3c), the slider (7) being mounted on a device for displacement perpendicular to the direction of sliding of the slider (7).

5. Machine (1, 11) according to Claim 3 or 4, **characterized in that** the slider (7) is mounted on a displacement device that is synchronized with the displacement means of the station raising device (4).

6. Machine (1, 11) according to any one of the preceding claims, **characterized in that** it comprises a drive for the displacement means of the station raising device (4).

7. Machine (11) according to any one of the preceding claims, **characterized in that** it comprises a system (12) for gripping a container (C), having an engagement state in which a container (C) is held by the gripping system (12) and a release state in which a container (C) is released after having been held, the gripping system (12) being able to move between a container (C) arrival position and multiple membrane seal application positions respectively corresponding to the locations for a container (C) in the equipment items of the series of equipment items (23a, 23b, 23c).

8. Machine (11) according to any one of the preceding claims, **characterized in that** it further comprises a downstream retractable endless belt conveyor (14) that is intended to transport containers to which a membrane seal has been applied on its upper strand as far as the outlet of the machine and that is arranged so as to cover the lower toolings (3a, 3b, 3c) that are in the rest position and located downstream of the lower tooling that is in use.

9. Machine (11) according to Claim 8, **characterized in that** it further comprises an upstream retractable endless belt conveyor (15) that is intended to transport containers to which a membrane seal is to be applied on its upper strand from the inlet of the machine to the container arrival position and that is arranged so as to cover the lower toolings (3a, 3b, 3c) that are in the rest position and located upstream of the lower tooling that is in use.

10. Machine according to Claims 8 and/or 9, **characterized in that** the downstream conveyor (14) and/or the upstream conveyor (15) comprise(s) a secure connection (16, 17) to the station raising device (4) .

11. Machine according to Claims 8 and/or 9, **characterized in that** the retractable nature is obtained by imbricating portions of the conveyor and taking up the slack strand.

12. Machine according to Claims 8 and 9, **characterized in that** the upstream conveyor (15) and the downstream conveyor (14) comprise a common belt.
